# EUROPÄISCHE PATENTSCHRIFT

(11) **EP 0 868 076 B1**
(45) Veröffentlichungstag und Bekanntmachung des Hinweises auf die Patenterteilung: **07.07.2004**
(21) Anmeldenummer: 98105561.9
(22) Anmeldetag: 26.03.1998
(51) Int. Cl.: H04N 5/21

(54) **Verfahren und Schaltungsanordnung zur Rauschreduktion bei Fernseh- oder Videosignalen**
Method and circuit for reducing noise in TV or video signals
Méthode et circuit de réduction de bruit dans des signaux de télévision ou vidéo

(30) Priorität: 27.03.1997 DE 19713177
(43) Veröffentlichungstag der Anmeldung: 30.09.1998
(73) Patentinhaber: Micronas Munich GmbH, 81541 München (DE)
(72) Erfinder: Schröder, Hartmut, Prof., 44229 Dortmund (DE); Amer, Aishy, 44227 Dortmund (DE); Lück, Matthias, 44139 Dortmund (DE); Jostschulte, Klaus, 44369 Dortmund (DE); Blume, Holger, 44793 Bochum (DE)
(74) Vertreter: Patentanwälte Westphal, Mussgnug & Partner

(56) Entgegenhaltungen:
- WO-A-94/09592
- FR-A- 2 575 886
- US-A- 5 519 453
- HAAN DE G ET AL: "AN EVOLUTIONARY ARCHITECTURE FOR MOTION-COMPENSATED 100 HZ TELEVISION" IEEE TRANSACTIONS ON CIRCUITS AND SYSTEMS FOR VIDEO TECHNOLOGY, Bd. 5, Nr. 3, 1. Juni 1995, Seiten 207-217, XP000517124
- KARLSSON M ET AL: "EVALUATION OF SCANNING RATE UP CONVERSION ALGORITHMS;SUBJECTIVE TESTING OF INTERLACED TO PROGRESSIVE CONVERSION" IEEE TRANSACTIONS ON CONSUMER ELECTRONICS, Bd. 38, Nr. 3, 1. August 1992, Seiten 162-167, XP000311831
- LIM J.S.: 'Two-dimensional image processing', 1990, PRENTICE HALL INC., USA Seiten 546-549 und 483-488

## Beschreibung

Die Erfindung betrifft ein Verfahren zur Reduktion des Rauschens bei Fernseh- oder Videosignalen, sowie eine Schaltungsanordnung zur Durchführung des Verfahrens.

Fernseh- oder Videosignale enthalten oft einen hohen Anteil an Rauschen, der die Qualität eines darzustellenden Bildes beeinflusst. Diese Rauschstörungen haben verschiedene Ursachen. Rauschen kann bei der Filmabtastung in der Kamera oder im Filmscanner, sowie bei der Übertragung, beispielsweise bei terrestrischen Rundfunkübertragungsstrecken oder Kabelverteilanlagen, und der Aufzeichnung der Fernseh- oder Videosignale entstehen. Insbesondere die Bildwiedergabe durch einen Videorecorder führt wegen der Unzulänglichkeit der Magnetbandaufzeichnung zu einem relativ starken Rauschen.

Die den Rauschanteil bildenden Rauschsignale zeigen unterschiedliche Charakteristiken. Von besonderer Bedeutung dabei sind das gaußförmige Rauschen und das Impulsrauschen.

Eine Rauschreduktion lässt sich mittels zeitlicher Tiefpassfilterung eines Bildsignales, also der Mittelung ortsgleicher Bildpunkte aufeinanderfolgender Bilder, erreichen. Dabei macht man sich zunutze, dass der Rauschanteil am gleichen Punkt in aufeinanderfolgenden Bildern als statistisch unabhängig angesehen werden kann, während der Bildinhalt quasi identisch ist.
Als zeitliches Filter wird in der Regel ein rekursives Filter erster Ordnung verwendet, um den Aufwand in vertretbaren Grenzen zu halten. Bei einem solchen Filter wird ein Ausgangsbildsignal zeitverzögert und mit einem Bewertungsfaktor (1-k) gewichtet zu einem mit einem Rekursionsfaktor k gewichteten Eingangsbildsignal addiert. Die Stärke der Rauschreduktion wird dabei über den Rekursionsfaktor k bestimmt. Ein Rekursionsfaktor k=1 bedeutet, dass keine Rauschreduktion, ein Rekursionsfaktor k nahe Null bedeutet, dass eine sehr große Rauschreduktion vorliegt. Bei der statischen zeitlichen Tiefpassfilterung ist für jeden Bildpunkt eines Fernseh- oder Videobildes der Rekursionsfaktor k fest eingestellt.

Nachteil dieses Verfahrens ist, dass ein kleiner Wert für den Rekursionsfaktor k zu einer Bewegungsverschleifung in bewegten Bildbereichen führt. Zur Vermeidung von Bewegungsverschleifungen wird der Rekursionsfaktor k entsprechend höher gewählt, was zu einer geringen Rauschreduktion führt.

Bei einer bewegungsadaptiven zeitlichen Tiefpassfilterung wird das Ausgangssignal eines Bewegungsdetektors dazu verwendet, den Rekursionsfaktor k des Filters der Stärke der Bewegung anzupassen und dadurch eine Bewegungsverschleifung zu vermeiden. Es wird also versucht, in unbewegten Bildbereichen eine starke Rauschreduktion und in Bildteilen mit viel Bewegung eine geringe Rauschreduktion durchzuführen. Es ist leicht einzusehen, dass der Aufwand für ein Verfahren mit an den Bewegungsgehalt des Bildes angepasstem Rekursionsfaktor k um ein vielfaches höher ist als beim statischen Verfahren mit konstantem Rekursionsfaktor k.

Bewegungsvektorgestützte Verfahren führen die Filterung mit Bildpunkten des Fernseh- oder Videobildes gleichen Bildinhaltes durch. Dieses wird über eine Bewegungsschätzung erreicht, die für jeden Bildpunkt eines Bildes einen Bewegungsvektor bestimmt. Die Filterung der Bildpunkte findet dann entlang des Bewegungsvektors statt. Nachteilig hierbei ist der sehr hohe Hardwareaufwand.

Alle Verfahren haben den Nachteil, dass speziell bei starker Rauschreduktion (sehr kleinem Rekursionsfaktor k) im Bild quasi-statische Rauschmuster sichtbar bleiben.

Eine weitere Möglichkeit der Rauschredukion ist eine örtliche Rauschreduktion. Bei ihr wird ausgenutzt, dass der Bildinhalt eine höhere örtliche Korrelation besitzt als das Rauschen. Aus diesem Grund führt man eine örtliche Tiefpassfilterung durch, durch die das im Bild vorhandene Rauschen, das einen Erwartungswert von Null hat, beseitigt werden soll. Dazu wird nacheinander über jeden Bildpunkt, der zu bestimmen ist, eine zweidimensionale Filtermaske gelegt. Aus den Bildpunkten innerhalb der Filtermaske wird der zu bestimmende Bildpunkt ermittelt.

Die örtliche Tiefpassfilterung kann sowohl nichtlinear als auch linear erfolgen. Gaußförmiges weißes Rauschen wird mit Hilfe von linearen Filtern und impulsförmiges Rauschen mit Hilfe von nichtlinearen Filtern relativ gut beseitigt. Nachteil der örtlichen Tiefpassfilterung ist die gegenüber der zeitlichen Filterung verhältnismässig geringe Rauschreduktion. Ein weiterer Nachteil bei der örtlichen Tiefpassfilterung ist die Kantenverschleifung im Inhalt des Fernseh- oder Videobildes. Die Filterung über eine Kante führt zu einer Reduktion der Steilheit dieser Kante, was vom Auge als Unschärfe wahrgenommen wird. Die Kantenverschleifung nimmt umso mehr zu, je größer die Filtermaske ist. Bei einer großen Filtermaske wird jedoch die größte Rauschreduktion erzielt.

Die US-A-5,519,453 beschreibt ein Verfahren zum Beseitigen von Interferenzsignalen aus Videosignalen, wobei bei diesem bekannten Verfahren zunächst eine bewegungsvektorgestützte Filterung und danach eine Medianfilterung durchgeführt wird.

Die WO-A-94/09592 beschreibt eine Filtervorrichtung für digitale Videobilder, wobei das Filter zweistufig aufgebaut ist und ein Medianfilter und ein rekursives Filter umfasst.

Die FR-A-2575886 beschreibt ebenfalls eine Filtervorrichtung für ein Videosignal, die zweistufig aufgebaut ist und ein Medianfilter sowie ein rekursives Filter aufweist.

Aufgabe der vorliegenden Erfindung ist es, ein verbessertes Verfahren zur Rauschreduktion, das eine hohe Rauschreduktion erzielt, sowie eine Vorrichtung zur Durchführung eines solchen Verfahrens anzugeben.

Diese Aufgabe wird erfindungsgemäß durch ein Verfahren gemäß Anspruch 1 sowie durch eine Vorrichtung gemäß Anspruch 17 gelöst.

Ausgestaltungen und Weiterbildungen der Erfindung sind in den abhängigen Ansprüchen angegeben.

Die erfindungsgemäßen Verfahren haben den Vorteil, dass sie die zur Rauschreduktion bereits bekannte örtliche Tiefpassfilterung benutzen. Bestehende örtliche Rauschreduktionsverfahren lassen sich problemlos zu den erfindungsgemäßen Verfahren erweitern.

Besonders vorteilhaft ist es, wenn bei auftretenden Kanten im Fernseh- oder Videobild die örtliche Tiefpassfilterung nur in Richtung dieser Kante erfolgt. Die bei örtlichen Verfahren übliche Filterung mittels zweidimensionaler Filtermaske vereinfacht sich in diesem Fall zu einer eindimensionalen Filterung.

Insbesondere bei sehr bewegten Bildsequenzen, also Bildfolgen, bei denen die Bildsignale von einem zum nächstfolgenden Bild großen Veränderungen unterliegen, lassen sich die erfindungsgemäßen Verfahren vorteilhaft anwenden. Eine immer mit Fehlern behaftete Schätzung eines Bewegungsvektors entfällt.

Die Erfindung wird nachfolgend anhand der Figuren näher erläutert.

Es zeigen:
- Figur 1: ein Prinzipblockschaltbild für ein erfindungsgemäßes Rauschreduktionsverfahren,
- Figur 2: ein Prinzipbild zur Bestimmung einer Filterrichtung bei einem erfindungsgemäßen Verfahren,
- Figur 3: ein Prinzipbild zur Filterung an einer Kante bei einem erfindungsgemäßen Verfahren,
- Figur 4: ein Prinzipbild zur Filterung an einer Ecke bei einem erfindungsgemäßen Verfahren,
- Figur 5: ein Prinzipbild zur Filterung eines homogenen Bildbereiches bei einem erfindungsgemäßen Verfahren und
- Figur 6: ein Blockschaltbild einer erfindungsgemäßen Schaltungsanordnung.

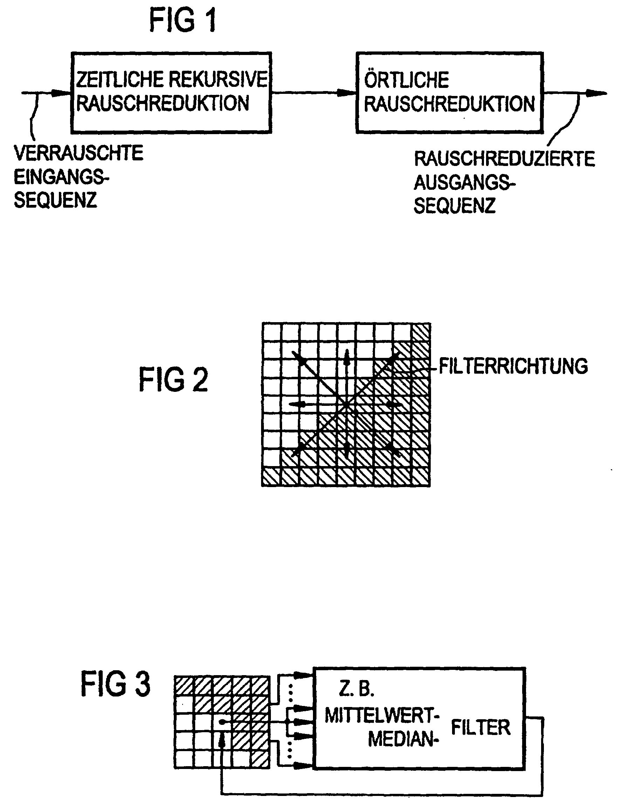

Figur 1 zeigt ein Prinzipblockschaltbild eines ersten erfindungsgemäßen Rauschreduktionsverfahrens. Eine verrauschte Eingangssequenz, die Bildsignale der aufeinanderfolgenden Fernseh- oder Videobilder aufweist, wird einer ersten Rauschreduktionsstufe zugeführt. In der ersten Rauschreduktionsstufe wird eine zeitlich rekursive Rauschreduktion mittels zeitlicher Tiefpassfilterung durchgeführt. Als rekursives Filter kann ein Filter erster Ordnung oder auch ein Filter höherer Ordnung verwendet werden. Die zeitlich tiefpassgefilterte Eingangssequenz der ersten Rauschreduktionsstufe wird einer zweiten Rauschreduktionsstufe zugeführt. In der zweiten Rauschreduktionsstufe findet eine örtliche Rauschreduktion durch örtliche Tiefpassfilterung statt. Am Ausgang der zweiten Rauschreduktionsstufe liegt eine rauschreduzierte Ausgangssequenz an. Sie beinhaltet die rauschreduzierten Bildsignale der Eingangssequenz.

Bei zunächst zeitlicher Tiefpassfilterung und anschließender örtlicher Tiefpassfilterung ergaben sich die besten Ergebnisse der Rauschreduktion. Es ist jedoch auch denkbar, dass unter bestimmten Umständen eine zunächst örtliche Rauschreduktion und eine sich daran anschließende zeitliche Tiefpassfilterung günstiger ist. In der ersten Rauschreduktionsstufe kann eine statische, eine bewegungsadaptive oder eine bewegungsvektorgestützte zeitliche Tiefpassfilterung durchgeführt werden.

In der zweiten Rauschreduktionsstufe kann auch eine örtliche kantenadaptive Rauschreduktion eingesetzt werden. Die örtliche kantenadaptive Rauschreduktion wird nachfolgend beschrieben.

Ein zweites erfindungsgemäßes Verfahren zur Rauschreduktion geht von der bekannten örtlichen Tiefpassfilterung, wie sie üblicherweise mit Filtermasken durchgeführt wird, aus. Erfindungsgemäß wird jedoch nicht für alle Bildpunkte eine zweidimensionale Filtermaske verwendet. An Kanten im darzustellenden Inhalt des Fernseh- oder Videobildes, also an abrupten Übergängen der Signalwerte mehrerer benachbarter Bildpunkte, werden nicht alle Bildpunkte innerhalb der Filtermaske, sondern nur die Bildpunkte innerhalb der Filtermaske, die in Richtung der Kante liegen, herangezogen.

Figur 2 zeigt, wie eine Filterrichtung, also die Richtung der Kante, in der die Filterung durchgeführt wird, ermittelt wird. Ausgehend von einem bestimmten Bildpunkt, dessen Signalwert so zu bestimmen ist, dass er von einem Betrachter des Fernseh- oder Videobildes innerhalb desselben nicht als Rauschsignal empfunden wird, werden entlang verschiedener Richtungen die Signalwerte der Bildpunkte ermittelt. Für jede Richtung wird die Streuung der Signalwerte der Bildpunkte entlang dieser Richtung bestimmt. Die Richtung, in der die geringste Streuung auftritt, ist die Richtung der Kante. Die örtliche Tiefpassfilterung wird an einer Kante im Bildinhalt nur in einer solchen Filterichtung durchgeführt.

Figur 3 zeigt ein Beispiel für die Filterung an einer solchen Kante. Als Filterung reicht hierbei eine Mittelwertbildung zwischen drei benachbarten Bildpunkten aus, wobei der mittlere, zu bestimmende Bildpunkt mit verschiedenen Gewichtungsfaktoren in das Filter hineingeführt werden kann. Die Höhe der Gewichtungsfaktoren ist vom Grad des im Bild vorhandenen Rauschens abhängig. Auch andere bekannte Filtertypen, wie beispielsweise Median-Filter, können eingesetzt werden. In Figur 3 ist die Gewichtung des zu bestimmenden Bildpunktes durch drei Pfeile, deren Enden miteinander verbunden sind, symbolisiert.

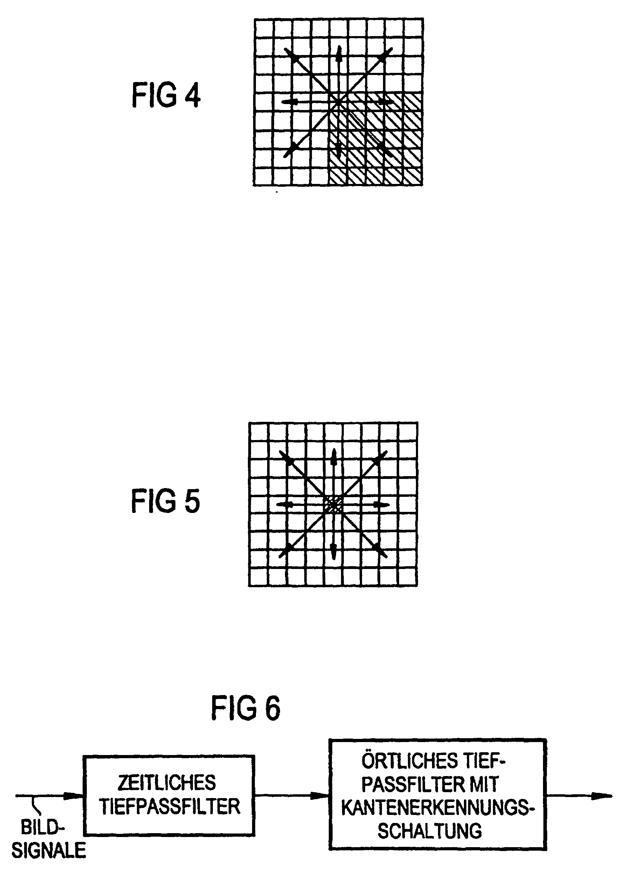

Wenn sich der zu bestimmende Bildpunkt genau in einer Ecke befindet, so ergeben sich für die Streuung der Bildpunkte in allen gewählten Richtungen sehr hohe Werte, was in Figur 4 dargestellt ist. Ab einer bestimmten oberen Schwelle für die Streuung bei dem gewählten zu bestimmenden Bildpunkt wird keine örtliche Filterung mehr durchgeführt. Die obere Schwelle ist dabei abhängig von der Ausdehnung der Maske zu bestimmen.

Figur 5 zeigt den zu bestimmenden Bildpunkt in einem homogenen Bildbereich eines Fernseh- oder Videobildes. Die Bildpunkte des homogenen Bildbereiches weisen alle etwa den gleichen Signalwert auf. Daher ergibt sich für alle von dem zu bestimmenden Bildpunkt ausgewählten Richtungen etwa die gleiche Streuung der Bildpunkte. Liegen die Abweichungen der Streuungen der jeweiligen Richtungen unterhalb einer unteren Schwelle, so kann zur Filterung eine beliebige Richtung ausgewählt werden oder eine Filterung mit einem zweidimensionalen Filter durchgeführt werden.

Eine mögliche Ausführungsform einer Rauschreduktionsschaltung zeigt Figur 6. Die Bildsignale der Fernseh- oder Videobilder liegen als Eingangssignal dieser Rauschreduktionsschaltung an einem zeitlichen Tiefpaßfilter an. Ein örtliches Tiefpaßfilter mit einer Kantenerkennungsschaltung übernimmt das zeitlich tiefpaßgefilterte Ausgangssignal des zeitlichen Tiefpaßfilters. Am Ausgang des örtlichen Tiefpaßfilters ist das Ausgangssignal der Rauschreduktionsschaltung verfügbar. Die Kantenerkennungsschaltung erkennt Kanten im Inhalt des Fernsehoder Videobildes sowie deren Richtung beispielsweise nach dem Verfahren wie es bereits anhand der Figur 2 erläutert wurde. Wird eine Kante erkannt, kann die örtliche Filterung des örtlichen Tiefpaßfilters beispielsweise wie bereits anhand der Figur 3 erläutert erfolgen.

Zur Ermittelung der Filterrichtung können neben den aus den Bildsignalen der Fernseh- oder Videobilder gewonnenen Bildpunkten auch solche Bildpunkte herangezogen weden, die aus den gewonnenen Bildpunkten beispielsweise durch Interpolation berechnet werden (Subpixel). Die berechneten Bildpunkte können hinsichtlich der vorliegenden Erfindung wie die aus den Bildsignalen gewonnen Bildpunkte behandelt werden.

## Patentansprüche

1. Verfahren zur Rauschreduktion bei aus Bildpunkten zusammengesetzten Fernseh- oder Videobildern mittels einer örtlichen Filterung,
**dadurch gekennzeichnet,**
**dass** die örtliche Filterung eines zu bestimmenden, zur Rauschreduktion vorgesehenen Bildpunktes mit Bildpunkten in einer Filterrichtung aus einer Vielzahl von möglichen Richtungen des Fernseh- oder Videobildes durchgeführt wird, in welcher Filterrichtung die Bildpunkte entlang dieser Filterrichtung im Vergleich zu den Bildpunkten entlang der Vielzahl der anderen Richtungen die geringste Streuung der Signalwerte dieser Bildpunkte bezüglich des zu bestimmenden Bildpunktes aufweisen.

2. Verfahren nach Anspruch 1,
**dadurch gekennzeichnet,**
**dass** das Fernseh- oder Videobild zusätzlich zeitlich gefiltert wird.

3. Verfahren zur Rauschreduktion nach Anspruch 2,
**dadurch gekennzeichnet,**
**dass** die zeitliche Filterung vor der örtlichen Filterung durchgeführt wird.

4. Verfahren zur Rauschreduktion nach Anspruch 2 oder 3,
**dadurch gekennzeichnet,**
**dass** für die zeitliche Filterung eine statische zeitliche Tiefpassfilterung verwendet wird.

5. Verfahren zur Rauschreduktion nach Anspruch 2 oder 3,
**dadurch gekennzeichnet,**
**dass** für die zeitliche Filterung eine bewegungsadaptive zeitliche Tiefpassfilterung verwendet wird.

6. Verfahren zur Rauschreduktion nach Anspruch 2 oder 3,
**dadurch gekennzeichnet,**
**dass** für die zeitliche Filterung eine bewegungsvektorgestützte zeitliche Tiefpassfilterung verwendet wird.

7. Verfahren zur Rauschreduktion nach Anspruch 2 oder 3,
**dadurch gekennzeichnet,**
**dass** für die örtliche Filterung eine örtliche Tiefpassfilterung verwendet wird.

8. Verfahren zur Rauschreduktion nach Anspruch 7,
**dadurch gekennzeichnet,**
**dass** die örtliche Filterung des zu bestimmenden Bildpunktes darin besteht, dass der Signalwert des zu bestimmenden Bildpunktes durch das arithmetische Mittel der Signalwerte der in der Filterrichtung liegenden benachbarten, mit Faktoren gewichteten Bildpunkte des zu bestimmenden Bildpunktes und diesem selbst ersetzt wird.

9. Verfahren zur Rauschreduktion bei aus Bildpunkten zusammengesetzten Fernseh- oder Videobildern mittels örtlicher Filterung nach Anspruch 1,
**dadurch gekennzeichnet,**
**dass** an Kanten innerhalb des Inhaltes des Fernseh- oder Videobildes die Filterung nur in Richtung der jeweiligen Kante erfolgt.

10. Verfahren zur Rauschreduktion nach Anspruch 9,
**dadurch gekennzeichnet,**
**dass** als Richtung der jeweiligen Kante eine Filterrichtung bestimmt wird, in der die Bildpunkte im Vergleich zu den Bildpunkten einer Vielzahl anderer Richtungen die geringste Streuung der Signalwerte dieser Bildpunkte aufweist und in der ein zu bestimmender Bildpunkt liegt.

11. Verfahren zur Rauschreduktion nach Anspruch 10,
**dadurch gekennzeichnet,**
**dass** die örtliche Filterung des zu bestimmenden Bildpunktes darin besteht, dass der Signalwert des zu bestimmenden Bildpunktes durch das arithmetische Mittel der Signalwerte der in der Filterrichtung liegenden benachbarten, mit Faktoren gewichteten Bildpunkten des zu bestimmenden Bildpunktes und diesem selbst ersetzt wird.

12. Verfahren zur Rauschreduktion nach Anspruch 10 oder 11,
**dadurch gekennzeichnet,**
**dass** beim Überschreiten einer ersten Schwelle der Streuung der Bildpunkte der jeweiligen Richtungen, in denen der zu bestimmenden Bildpunkt liegt, für diesen zu bestimmenden Bildpunkt keine örtliche Filterung durchgeführt wird.

13. Verfahren zur Rauschreduktion nach einem der Ansprüche 10 bis 12, **dadurch gekennzeichnet,**
**dass** bei Unterschreitung einer zweiten Schwelle der Streuung der Bildpunkte der jeweiligen Richtungen, in denen der zu bestimmenden Bildpunkt liegt, die Filterrichtung willkürlich festgelegt wird.

14. Verfahren zur Rauschreduktion nach einem der Ansprüche 10 bis 12, **dadurch gekennzeichnet,**
**dass** bei Unterschreitung der zweiten Schwelle der Streuung der Bildpunkte der jeweiligen Richtungen, in denen der zu bestimmenden Bildpunkt liegt, die Filterung mit einem zweidimensionalen Filter durchgeführt wird.

15. Verfahren zur Rauschreduktion nach einem der Ansprüche 10 bis 14, **dadurch gekennzeichnet,**
**dass** das Fernseh- oder Videobild zusätzlich zeitlich gefiltert wird.

16. Verfahren zur Rauschreduktion nach Anspruch 15,
**dadurch gekennzeichnet,**
**dass** die zeitliche Filterung vor der örtlichen Filterung durchgeführt wird.

17. Schaltungsanordnung zur Durchführung eines Verfahrens nach Anspruch 15, mit ersten Mitteln zur zeitlichen Tiefpassfilterung und mit zweiten Mitteln zur genannten örtlichen Filterung als Tiefpassfilterung, wobei die zweiten Mittel eine Kantenerkennungsvorrichtung enthalten, die Kanten im Inhalt des Fernseh- oder Videobildes und ihre Richtung mittels eines Verfahrens nach Anspruch 1 erkennt.

## Claims

1. A method for noise reduction in television or video pictures which are composed of picture elements by means of local filtering,
**characterised in that** the local filtering of a picture element to be determined and provided for noise reduction is performed in one filter direction from a plurality of possible directions of the television or video picture, in which filter direction the picture elements along this filter direction, in comparison with the picture elements along the plurality of the other directions, have the smallest scatter of the signal values of these picture elements with respect to the picture element to be determined.

2. A method according to Claim 1,
**characterised in that** the television or video picture is additionally temporally filtered.

3. A method for noise reduction according to Claim 2,
**characterised in that** the temporal filtering is performed before the local filtering.

4. A method for noise reduction according to Claim 2 or 3,
**characterised in that** a static temporal lowpass filtering is used for the temporal filtering.

5. A method for noise reduction according to Claim 2 or 3,
**characterised in that** a motion-adaptive temporal lowpass filtering is used for the temporal filtering.

6. A method for noise reduction according to Claim 2 or 3,
**characterised in that** a motion vector-supported temporal lowpass filtering is used for the temporal filtering.

7. A method for noise reduction according to Claim 2 or 3,
**characterised in that** a local lowpass filtering is used for the local filtering.

8. A method for noise reduction according to Claim 7,
**characterised in that** the local filtering of the picture element to be determined consists **in that** the signal value of the picture element to be determined is replaced by the arithmetic mean of the signal values of the adjacent picture elements, lying in the filter direction and weighted with factors, of the picture element to be determined, and this itself.

9. A method for noise reduction in television or video pictures composed of picture elements by means of local filtering according to Claim 1,
**characterised in that** at edges inside the content of the television or video picture, filtering only takes place in the direction of the respective edge.

10. A method for noise reduction according to Claim 9,
**characterised in that** as the direction of the respective edge a filter direction is determined in which the picture elements, in comparison with the picture elements of a plurality of other directions, has the smallest scatter of the signal values of these picture elements and in which a picture element to be determined lies.

11. A method for noise reduction according to Claim 10,
**characterised in that** the local filtering of the picture element to be determined consists **in that** the signal value of the picture element to be determined is replaced by the arithmetic mean of the signal values of the adjacent picture elements, lying in the filter direction and weighted with factors, of the picture element to be determined, and this itself.

12. A method for noise reduction according to Claim 10 or 11,
**characterised in that** if a first threshold of the scatter of the picture elements of the respective directions in which the picture element to be determined lies is exceeded, no local filtering is performed for this picture element to be determined.

13. A method for noise reduction according to one of Claims 10 to 12,
**characterised in that** if a second threshold of the scatter of the picture elements of the respective directions in which the picture element to be determined lies is not reached, the filter direction is arbitrarily fixed.

14. A method for noise reduction according to one of Claims 10 to 12,
**characterised in that** if the second threshold of the scatter of the picture elements of the respective directions in which the picture element to be determined lies is not reached, filtering is performed with a two-dimensional filter.

15. A method for noise reduction according to one of Claims 10 to 14,
**characterised in that** the television or video picture is additionally temporally filtered.

16. A method for noise reduction according to Claim 15,
**characterised in that** the temporal filtering is performed before the local filtering.

17. A circuit configuration for performing a method according to Claim 15, having first means for the temporal lowpass filtering and having second means for the mentioned local filtering as lowpass filtering, wherein the second means contain an edge recognition device which recognises edges in the content of the television or video picture and their direction by means of a method according to Claim 1.

## Revendications

1. Procédé de réduction du bruit, dans les images de télévision ou vidéo composées de points d'image, au moyen d'une filtration locale,
**caractérisé en ce que**
la filtration locale d'un point d'image à déterminer, prévu pour la réduction de bruit, est effectuée avec des points d'image situés dans une direction de filtration, choisie parmi une multiplicité de directions possibles de l'image de télévision ou vidéo de telle manière que les points d'image situés le long de cette direction présentent, comparativement aux points d'image situés le long de la multiplicité des autres directions, la plus faible dispersion des valeurs de signal de ces points d'image par rapport au point d'image à déterminer.

2. Procédé selon la revendication 1,
**caractérisé en ce que**
l'image de télévision ou vidéo est soumise en outre à une filtration chronologique.

3. Procédé de réduction du bruit selon la revendication 2,
**caractérisé en ce que**
la filtration chronologique est effectuée avant la filtration locale.

4. Procédé de réduction du bruit selon la revendication 2 ou 3,
**caractérisé en ce que**
pour la filtration chronologique, on utilise une filtration passe-bas chronologique statique.

5. Procédé de réduction du bruit selon la revendication 2 ou 3,
**caractérisé en ce que**
pour la filtration chronologique, on utilise une filtration passe-bas chronologique adaptive en mouvement.

6. Procédé de réduction du bruit selon la revendication 2 ou 3,
**caractérisé en ce que**
pour la filtration chronologique, on utilise une filtration passe-bas chronologique s'appuyant sur un vecteur de mouvement.

7. Procédé de réduction du bruit selon la revendication 2 ou 3,
**caractérisé en ce que**
pour la filtration locale, on utilise une filtration passe-bas locale.

8. Procédé de réduction du bruit selon la revendication 7,
**caractérisé en ce que**
la filtration locale du point d'image à déterminer consiste **en ce que** la valeur de signal de ce point d'image est remplacée par la moyenne arithmétique des valeurs de signal des points d'image voisins dudit point d'image et situés dans la direction de filtration, pondérés par des facteurs, et du point d'image à déterminer lui-même.

9. Procédé de réduction du bruit, dans les images de télévision ou vidéo composées de points d'image, au moyen d'une filtration locale selon la revendication 1,
**caractérisé en ce que**
sur des arêtes situées à l'intérieur du contenu de l'image de télévision ou vidéo, la filtration ne s'effectue que dans la direction de l'arête considérée.

10. Procédé de réduction du bruit selon la revendication 9,
**caractérisé en ce que**
comme direction de l'arête considérée, on détermine une direction de filtration dans laquelle les points d'image présentent, par rapport aux points d'image d'une multiplicité d'autres directions, la dispersion la plus faible des valeurs de signal correspondantes, et dans laquelle se situe un point d'image à déterminer.

11. Procédé de réduction du bruit selon la revendication 1,
**caractérisé en ce que**
la filtration locale du point d'image à déterminer consiste **en ce que** la valeur de signal de ce point d'image est remplacée par la moyenne arithmétique des valeurs de signal des points d'image voisins dudit point d'image et situés dans la direction de filtration, pondérés par des facteurs, et du point d'image à déterminer lui-même.

12. Procédé de réduction du bruit selon la revendication 10 ou 11,
**caractérisé en ce que**
lorsque l'on dépasse un premier seuil de la dispersion des points d'image des directions considérées, dans lesquelles se situe le point d'image à déterminer, aucune filtration locale n'est effectuée pour ce dernier.

13. Procédé de réduction du bruit selon l'une des revendications 10 à 12,
**caractérisé en ce que**
lorsque l'on passe en dessous d'un second seuil de la dispersion des points d'image des directions considérées, dans lesquelles se situe le point d'image à déterminer, la direction de filtration est fixée arbitrairement.

14. Procédé de réduction du bruit selon l'une des revendications 10 à 12,
**caractérisé en ce que**
lorsque l'on passe en dessous d'un second seuil de la dispersion des points d'image des directions considérées, dans lesquelles se situe le point d'image à déterminer, la filtration est effectuée à l'aide d'un filtre bidimensionnel.

15. Procédé de réduction du bruit selon l'une des revendications 10 à 14,
**caractérisé en ce que**
l'image de télévision ou vidéo est en outre filtrée chronologiquement.

16. Procédé de réduction du bruit selon la revendication 15,
**caractérisé en ce que**
la filtration chronologique est effectuée avant la filtration locale.

17. Montage pour la réalisation d'un procédé selon la revendication 15, comportant de premiers moyens en vue de la filtration passe-bas chronologique et de seconds moyens en vue de la filtration locale sous forme de filtration passe-bas, et dans lequel les seconds moyens contiennent un dispositif de détection d'arêtes qui détecte, au moyen d'un procédé selon la revendication 1, les arêtes situées dans le contenu de l'image de télévision ou vidéo, ainsi que leur direction.
